# EUROPÄISCHE PATENTSCHRIFT

(11) **EP 1 877 690 B1**
(45) Veröffentlichungstag und Bekanntmachung des Hinweises auf die Patenterteilung: **24.03.2010**
(21) Anmeldenummer: 06724710.6
(22) Anmeldetag: 04.05.2006
(51) Int. Cl.: F16L 23/04

(54) **SPANNRING FÜR DIE VERBINDUNG DÜNNWANDIGER ROHRE**
CLAMPING RING FOR CONNECTING THIN-WALLED TUBES
COLLIER DE SERRAGE POUR LA LIAISON DE TUBES A PAROI MINCE

(30) Priorität: 06.05.2005 DE 102005021646
(43) Veröffentlichungstag der Anmeldung: 16.01.2008
(73) Patentinhaber: Metu Meinig AG, 78604 Rietheim-Weilheim (DE)
(72) Erfinder: MEINIG, Manfred, 78604 Rietheim-Weilheim (DE)
(74) Vertreter: Patentanwälte Westphal, Mussgnug & Partner
(86) Internationale Anmeldenummer: PCT/EP2006/004168
(87) Internationale Veröffentlichungsnummer: WO 2006/119913

(56) Entgegenhaltungen:
- DE-A1- 2 230 991
- DE-A1- 19 728 655
- DE-C1- 3 537 504
- GB-A- 591 284
- GB-A- 1 579 421
- US-A- 2 937 893

## Beschreibung

Die Erfindung bezieht sich auf einen offenen Spannring, der dem Verbinden dünnwandiger Rohre mit Endflanschen dient. Zum Verspannen dieses Spannringes ist ein Spannschloss vorgesehen, mit welchem die Enden des Spannringes zusammengezogen werden. Ein Spannring nach dem Oberbegriff von Anspruch 1 ist beispielsweise aus der US 2 937 893 oder der DE 197 28 655 A1 bekannt.

Dünnwandige Rohre, wie sie z.B. in der Absaugungs-, Klima- und Lüftungstechnik verwendet werden, werden in zunehmendem Maße mit Blechprofilflanschen versehen, die mit den genannten Spannringen zusammengezogen und derart miteinander verbunden werden.

Meist genügt eine Schraube mit entsprechender großer Schraublänge oder ein Hebelschloss, um diesen Spannring schnell und in einfacher Weise zu schließen. Diese Verbindungsart führt zu einer erheblichen Montagezeitersparnis verglichen mit der Zeit zur Verbindung von aus Flach- oder Winkeleisen bestehenden Flanschen, die mit einer Vielzahl von einzelnen Schrauben miteinander verbunden werden müssen.

Bei den Endflanschen kann es sich um auf die Enden der Rohre aufgesetzte oder mit diesen einstückige, angeformte Blechprofilflansche handeln. Für die Verbindung dieser Flansche geeignete Spannringe haben je nach Dichtungsart unterschiedliche Querschnittsprofile. Die am meisten verbreiteten Spannringe haben V-förmige Querschnittsprofile. Seltener sind U-förmige Querschnittsprofile oder sonstige Formen.

Die einfachste Form eines angeformten Flansches besteht aus einem Steh- oder Flanschbord. Zur Herstellung dieser Flansche wird das Rohrende winkelgerecht nach außen abgekantet oder mit Rollwerkzeugen gebördelt. Der Verbindung derartiger als Stehborde ausgebildeter Flansche dient ein einfacher, in Form einer Sickenschelle ausgebildeter Spannring.

Diese zwar preisgünstige Verbindungsart ist jedoch weder luftdicht noch stabil.

Zur Herstellung luftdichter und stabilerer Verbindungen sind im Querschnitt V-förmige oder U-förmige Spannringe besser geeignet, in welche ein Dichtungsband zur Erzeugung der Luftdichtheit eingelegt ist.

Auch kann das Dichtungsband zwischen die einander zugewandten Flächen der Rohrendflansche eingelegt sein.

Derartige Spannringe eignen sich auch grundsätzlich für die Verbindung von im Querschnitt kreisförmigen Flanschen, die üblicherweise an die Enden der Rohre angebördelt werden.

Bei höheren Anforderungen an Dichtheit und Stabilität eignen sich besser kegelförmige Rohrflansche, die mit aufgesetzten, im Querschnitt V-förmigen Spannringen miteinander verbunden werden. Auch diese Rohrflansche können entweder aufgesetzt oder angeformt sein. Bei dieser Verbindungsart erfolgt die Abdichtung entweder durch im Scheitelbereich oder zwischen die einander zugewandten Flächen der Flansche eingelegte Dichtungsbänder.

Diese Kegelflanschverbindungen haben sich deshalb in der Praxis sehr bewährt, weil bei der Montage die Rohrenden mittels des Flanschringes sowohl axial gegeneinander gezogen als auch radial ausgerichtet werden. Diese Doppelfunktion wird am besten erfüllt, wenn die Außenflächen der Rohrflansche und entsprechend die Innenflächen der Spannringe gegenüber der Rohrwand eine Neigung von etwa 60° aufweisen.

Trotz der geschilderten Vorteile hat jedoch auch diese Verbindung noch recht erhebliche Mängel, nämlich:
a) Beim Zusammenziehen des Spannringes ist ein erheblicher Reibungswiderstand zu überwinden. Ursache hierfür ist, dass die kegligen Rohrflanschaußenflächen und die entsprechenden Spannringinnenflächen auf dem gesamten Umfang großflächig aneinander anliegen, was, da die Oberflächen meist verzinkt, also rau, sind, zu einer beträchtlichen Reibung führt. Ist der Spannring soweit geschlossen, dass die genannten Flächen sich kraftschlüssig berühren, dann reicht die Zugkraft des einzigen Spannschlosses nicht mehr aus, den Spannring über den gesamten Umfang vollständig zusammenzuziehen. Vielmehr entwickelt sich die Spannkraft ausschließlich im Bereich des Spannschlosses, da sie wegen der starken Reibung nicht auf den entfernter liegenden Bereich der Flächen weitergeleitet wird. Die Folge ist, dass der Spannring und damit die Rohrflansche ungleichmäßig verformt werden.
   Die ungleiche Spannkraftverteilung hat zur Folge, dass die im Scheitel des im Querschnitt V-förmigen Spannringes eingeklebte Dichtung unterschiedlich stark komprimiert wird, was eine verschlechterte Dichtung zur Folge hat.
   Zwar versucht man bei der Montage eine bessere, also symmetrische Verteilung der Spannkraft dadurch zu erreichen, dass man mit einem Gummihammer leichte Schläge auf den Außenumfang des Spannringes erteilt.
   Abgesehen davon, dass sich hierdurch eine Verzögerung der Montage ergibt, bietet auch diese Maßnahme keine ausreichende Sicherheit für die gleichmäßige Spannkraftverteilung sowie gleichmäßige Abdichtung.
b) Ein weiterer Nachteil ergibt sich dadurch, dass auch an den stirnseitigen Flanschflächen der erläuterte Reibungswiderstand insbesondere dann auftritt, wenn auf einer dieser Flanschflächen eine reibungsverstärkende Dichtung aufgeklebt ist. Wird nämlich der Spannring geschlossen, werden die Flansche mittels Ihrer schrägen Flansche axial gegeneinander gezogen. Hierbei wird die Dichtung zwischen den Flanschflächen zusammengepresst, ehe die radial zentrierende Wirkung im Bereich des Scheitels des im Querschnitt V-förmigen Spannrings eintritt. Die Folge ist, dass die Rohrachsen und damit die Rohrwände nicht miteinander fluchten, vielmehr gegeneinander versetzt sind. Sie können auch bei weiterem Anziehen des Spannrings nicht mehr ausgerichtet werden, da dies durch die Reibung der Flanschflächen bzw. der Dichtung verhindert wird.
   Das hat aber zur Folge, dass sich bei geschlossener Verbindung im Rohrinnern ein Absatz bildet, der zur Störung des Luftstromes und zu Ablagerungen im Bereich dieses Absatzes führt, was die spätere Reinigung erschwert.
   Auch bei Flanschverbindungen, bei welchen im Scheitel des Spannrings eine Schaumgummidichtung eingeklebt ist, ergibt sich die gleiche Problematik, da der Druck der vergleichsweise weichen Dichtung nicht ausreicht, die Rohrachsen gegen die Reibung der Flanschflächen auszurichten.
c) Eine weitere Problematik ergibt sich bei im Querschnitt V-förmigen Spannringen dadurch, dass das Ausrichten der miteinander zu verbindenden Rohrflansche, nämlich das Querverschieben der beiden Rohrflansche in radialer Richtung bis zum V-Scheitel des Spannringes bzw. der in diesen Bereich eingeklebten Dichtung ganz davon abhängt, wann sich die Stirnflächen der Flansche berühren. Schon bei leichten Formabweichungen dieser Flansche, die bei derartigen Blechprofilen nicht selten sind, stimmen die Eindringtiefen der beiden Rohrflansche nicht mehr überein, was den schon unter b) erläuterten Achsverschiebungseffekt zur Folge hat.
   Um diesen Umständen Rechnung zu tragen, also die Abweichungen auszugleichen, muss eine hohe, weiche und flexible Dichtung verwendet werden, die in den V-Scheitel des Spannringes eingeklebt wird. Hierfür geeignet sind Schaumstoffdichtungen. Diese Dichtungen reichen zwar aus, um in der Lüftungstechnik übliche mittlere Luftdrücke abzudichten, sind aber für sehr hohe Drücke oder gar für wasser- und öldichte Abdichtungen völlig ungeeignet.

Der vorliegenden Erfindung liegt die Aufgabe zugrunde, einen Spannring der erläuterten und im Oberbegriff des Anspruchs 1 angegebenen Art zu schaffen, der diese Nachteile nicht besitzt. Auch dieser Spannring hat einen im Wesentlichen U-förmigen Querschnitt, der aus einem sich etwa parallel zu den Stirnrändern der Endflansche erstreckenden Mittelsteg mit beidseitigen Schenkeln besteht, welche bestimmungsgemäß an den Endflanschen der miteinander zu verbindenden Rohre anliegen.

Gelöst ist diese Aufgabe durch einen Spannring mit den Merkmalen gemäß Anspruch 1.

Die Spannkanten gewährleisten einerseits eine sichere Übertragung der Spannkraft und führen andererseits wegen der Linienberührung nur zu relativ geringen Reibungswiderständen. Damit ist gewährleistet, dass bei Erzeugung der Spannkraft mittels eines einzigen Spannschlosses die Spannkräfte symmetrisch auf die Endflansche übertragen werden, was eine optimale Ausrichtung der miteinander zu verbindenden Rohre in radialer Richtung gewährleistet.

Besonders zweckmäßig ist die Ausgestaltung des mit Anspruch 3 gekennzeichneten Spannrings, dessen Schenkel im Querschnitt die Form eines flachen V haben, wobei der mit dem Mittelsteg verbundene innere Abschnitt mit diesem einen Winkel von weniger als 90° einschließt und sich an diesen Abschnitt ein unter einem Winkel von größer als 90° abstehender äußerer Abschnitt anschließt, wobei die Stoßstelle zwischen diesen beiden Abschnitten die oben erläuterte Spannkante bildet.

Insgesamt hat ein derartiger Spannring in etwa die Form eines X.

Der erfindungsgemäße Vorschlag bietet eine Vielzahl von Gestaltungsmöglichkeiten.

Entspricht der Abstand einander gegenüberliegender Spannkanten exakt der doppelten Stärke der Endflansche der miteinander zu verbindenden Rohre, so muss nach dem Vorschlag gemäß Anspruch 4. der Spannring aus einem elastisch wenig verformbaren Material bestehen.

Ein Spannring mit elastisch federnd ausgebildeten Schenkeln ist dann verwendbar, wenn nach dem Vorschlag gemäß Anspruch 5 der in Axialrichtung der Rohre gemessene Abstand der Spannkanten kleiner als die doppelte Stärke der Endflansche der zu verbindenden Rohre ist. In diesem Fall werden die Endflansche von den federnden Schenkeln des Spannringes zusammengehalten.

Erfindungsgemäß ist ein Dichtungsband in den Spannring zwischen der Innenfläche des Mittelsteges und den Stirnflächen der Endflansche eingelegt.

Dieses Dichtungsband hat einen rechteckigen Querschnitt und ist mit dem Spannring nicht fest verbunden, sondern in Umfangsrichtung verschiebbar.

Zur weiteren Verbesserung der Dichtung ist erfindungsgemäß vorgesehen, dass der Abstand zwischen den Enden des Dichtungsrings kleiner als der Abstand zwischen den Enden des Spannringes ist.

Um den Bereich unterhalb des Spannschlosses, nämlich zwischen den offenen Enden des Spannringes, zu überbrücken, wird gemäß der Erfindung vorgeschlagen, in diesem Bereich ein an den Innenquerschnitt des Spannringes angepasstes Brückenelement in Umfangsrichtung verschiebbar einzulegen.

Eine besondere Stabilität für dieses Brückenelement ergibt sich nach dem Vorschlag nach Anspruch 2, wenn das Brückenelement ein im Querschnitt U-förmiger Profilring vorzugsweise aus Blech ist, der erfindungsgemäß zwischen der Innenseite des Mittelsteges und das Dichtungsband eingelegt ist.

Der Gegenstand der Erfindung ist nachstehend anhand von bevorzugten Ausführungsbeispielen des Spannringes erläutert.

In den Zeichnungen zeigen:
- Fig. 1: Querschnitt eines Spannrings nach einem ersten Ausführungsbeispiel gemäß der Erfindung,
- Fig. 2: Querschnitt eines auf die Endflansche zweier miteinander zu verbindender Rohre aufgesetzten Spannringes gemäß Figur 1, wobei die Rohre noch radial gegeneinander versetzt sind,
- Fig. 3: Anordnung gemäß Figur 2 bei zusammengezogenem Spannring und damit radial ausgerichteten Rohren,
- Fig. 4: Querschnitt eines elastischen Spannringes nach einem zweiten Ausführungsbeispiel mit für diesen geeigneten Rohrflanschen,
- Fig. 5: Querschnitt eines elastischen Spannringes nach einem dritten Ausführungsbeispiel mit für diesen geeigneten Rohrflanschen,
- Fig. 6: Querschnitt eines elastischen Spannringes nach einem vierten Ausführungsbeispiel, aufgesetzt auf die miteinander verbundenen Rohrflansche,
- Fig. 7: Querschnitt eines Spannringes nach einem fünften Ausführungsbeispiel, aufgesetzt auf die miteinander verbundenen Stehborde,
- Fig. 8: teilweise aufgebrochene Seitenansicht eines Spannringes nach einem sechsten Ausführungs- beispiel und
- Fig. 9: Querschnitt des Spannringes längs der Linie IX-IX in Figur 8.

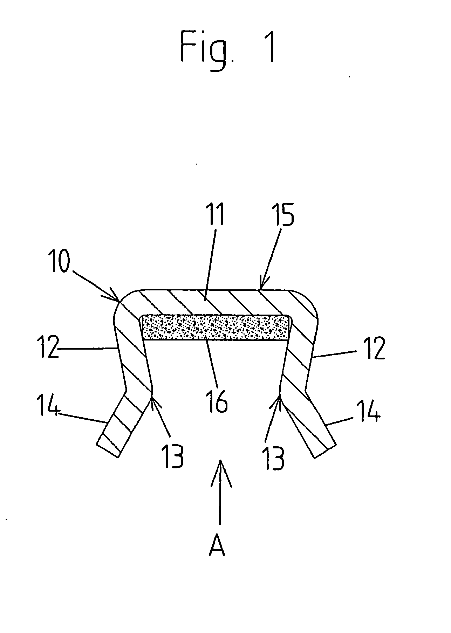

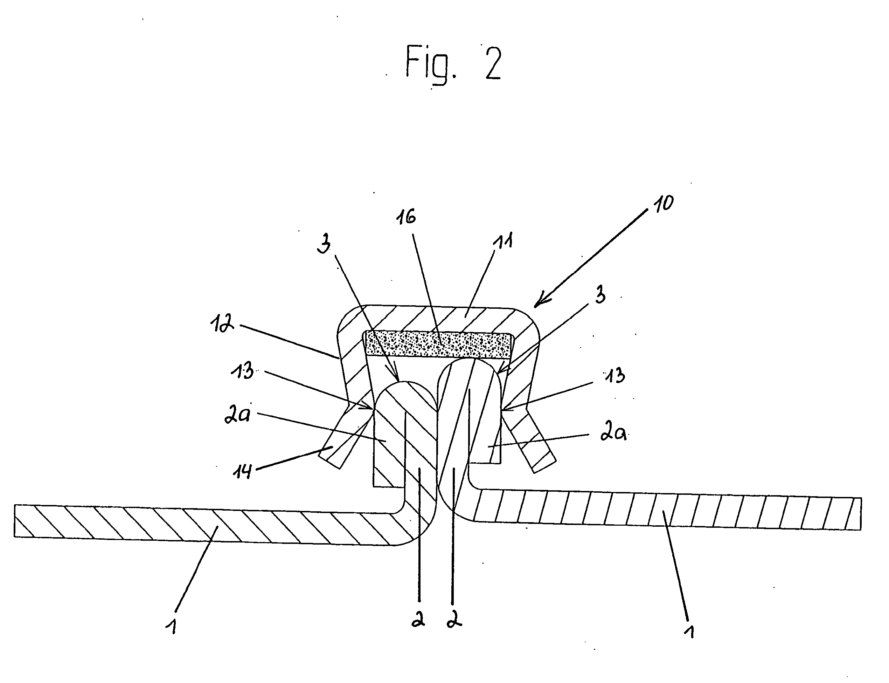

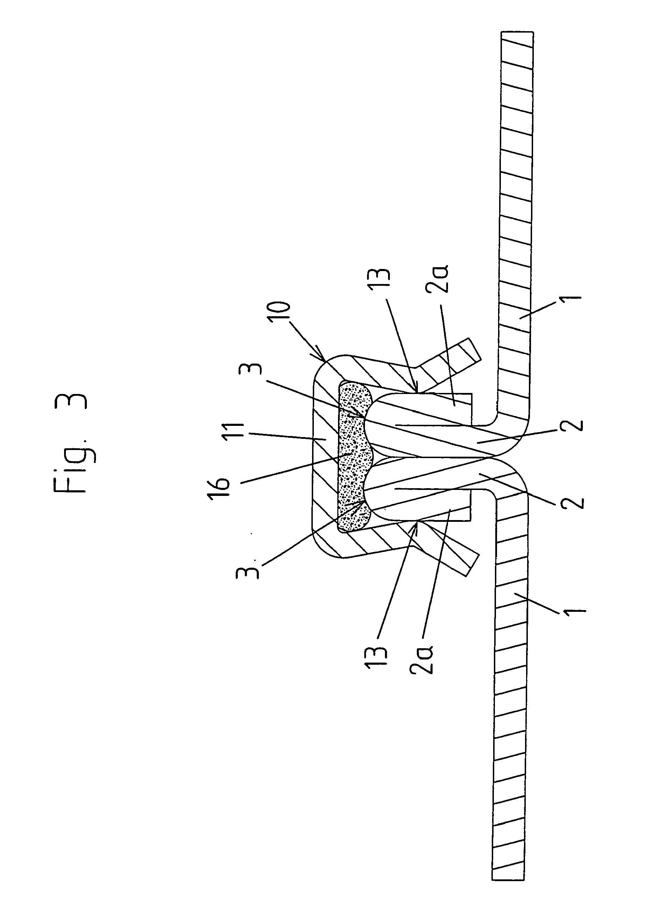

Der in Figur 1 im Querschnitt dargestellte Spannring ist ein im Wesentlichen U-förmiger Blechprofilring 10 mit einem Mittelsteg 11 und beiseitigen Schenkeln 12 bis 14. Diese Schenkel bestehen aus einem inneren Schenkelabschnitt 12 und einem äußeren Schenkelabschnitt 14, die im Querschnitt die Form eines flachen V haben und an ihrer Stoßstelle eine Spannkante 13 bilden. Die inneren Schenkelabschnitte 12 schließen mit dem Mittelsteg 11 einen Winkel kleiner 90° ein, während die äußeren nach außen abstehenden Schenkelabschnitte 14 mit den inneren Schenkelabschnitten 12 einen Winkel größer als 90° einschließen. Damit bilden die äußeren Schenkelabschnitte 14 Einführschrägen für die in den Figuren 2 und 3 dargestellten Endflansche 2, die in Richtung A in den Spannring 10 beim Verschließen des Spannschlosses bestimmungsgemäß eingezogen werden. An der Innenseite des Mittelsteges 11 ist ein Dichtungsband 16 vorgesehen, das, wie die Figuren 2 und 3 veranschaulichen, für die stirnseitige Abdichtung der Endflansche 2 sorgt. Der Mittelsteg 11 ist relativ breit und im Wesentlichen eben ausgebildet, so dass auf seiner Außenfläche 15 ein Spannschloss beliebiger Art auf einfache Weise z.B. durch Schweißen, Nieten oder Druckfügen befestigt werden kann.

Die Figuren 2 und 3 veranschaulichen die Funktionsweise des erfindungsgemäßen Spannringes 10, welcher auf die als doppelwandige Stehborde ausgebildeten Endflansche 2 der miteinander zu verbindenden Rohre 1 aufgesetzt ist.

Bei der Darstellung gemäß Figur 2 sind die Enden der beiden Rohre 1 bzw. ihre Endflansche 2 radial noch versetzt, der Spannring 10 ist noch nicht zusammengezogen. Bei diesem Ausführungsbeispiel besteht der Spannring 10 aus elastisch wenig verformbarem Material, vorzugsweise Stahl, wobei er so bemessen ist, dass der axiale Abstand der Spannkanten 13 dem Gesamtquerschnitt der Endflansche 2 entspricht. Die Spannkanten 13 liegen kraftschlüssig auf der Außenseite der Endabschnitte 2a der Endflansche 2 auf und halten damit die Flansche in axialer Richtung zusammen. Beim Verspannen des Spannringes 10 mittels des nicht dargestellten Spannschlosses werden die Rohre 1 mit ihren Endflanschen 2 radial ausgerichtet, bis die Rohre axial fluchten und die Flansche 2 mit ihren Stirnflächen 3 in das Dichtungsband 16 eintauchen. Bei dieser Spannringgestaltung erfolgt eine eindeutige Aufgabenaufteilung, wobei die Funktionen der radialen Ausrichtung und des axialen Verspannens unabhängig voneinander sind und sich nicht gegenseitig behindern, bis die in Figur 3 dargestellte Endposition erreicht ist.

So ist aus Figur 2 erkennbar, dass im Anfangsstadium des Schließvorganges der Spannring 10 zunächst nur mit seinen Spannkanten 13 auf den Außenseiten der Flanschendabschnitte 2a aufliegt und hierdurch die Enden axial zusammenhält.

Die radiale Ausrichtung erfolgt erst beim weiteren Schließen des Spannringes, wenn die Endflansche 2 mit ihren Stirnflächen 3 auf das Dichtungsband 16 auftreffen, wie dies aus Figur 3 ersichtlich ist. Die radiale Ausrichtung wird durch die eingangs erläuterte Reibung kaum oder nur wenig behindert, da die Flanschflächen mehr oder minder drucklos aufeinander liegen und der Spannring nicht vollflächig, sondern nur mit den Spannkanten 13 linienförmig auf den Außenflächen der Flanschendabschnitte 2a aufliegt.

Der entscheidende Vorteil des erfindungsgemäßen Spannringes besteht folglich darin, dass die mittels des Spannschlosses erzeugte Schließkraft nicht für das axiale Zusammenziehen der Flansche verbraucht wird, sondern zunächst vollständig für das dichtende Einpressen der Flanschstirnflächen 3 in das Dichtungsband 16 ausgenutzt wird. Hierbei ist anders als bei den bekannten Spannringen die Schließkraft gleichmäßig über den gesamten Umfang verteilt, da die Reibung zwischen Spannring 10 und den Endflanschen 2 wegen der linienförmigen Berührung der Spannkanten 13 auf der Außenfläche der Flanschendabschnitte 2a gering ist.

Ein weiterer Vorteil dieses Spannringes ist, dass das Dichtungsband 16 aus jedem für die jeweiligen Anforderungen optimal geeigneten Dichtmaterial bestehen kann. Es kann einfach und ohne Klebung eingelegt werden, da es radial durch die schrägstehenden inneren Schenkelabschnitte 12 gehalten ist.

Damit ist das Dichtungsband 16 in Umfangsrichtung des Spannringes 10 frei verschiebbar, was sich beim Schließvorgang im Bereich des Spannschlosses als besonders vorteilhaft auswirkt.

Die Gegenüberstellung von Figur 2 und 3 zeigt, dass nach dem Schließen des Spannringes die beiden Rohre 1 mit ihren Flanschen 2 radial ausgerichtet sind, so dass ein Absatz zwischen den aneinander anliegenden Endflanschen 2 vermieden ist.

Die Ausgestaltung des Spannringes nach den Figuren 1 bis 3 setzt die Verwendung eines elastisch wenig verformbaren Materials voraus, so dass die Schenkelabschnitte 12 bis 14 nicht oder nur wenig in axialer Richtung ausfedern.

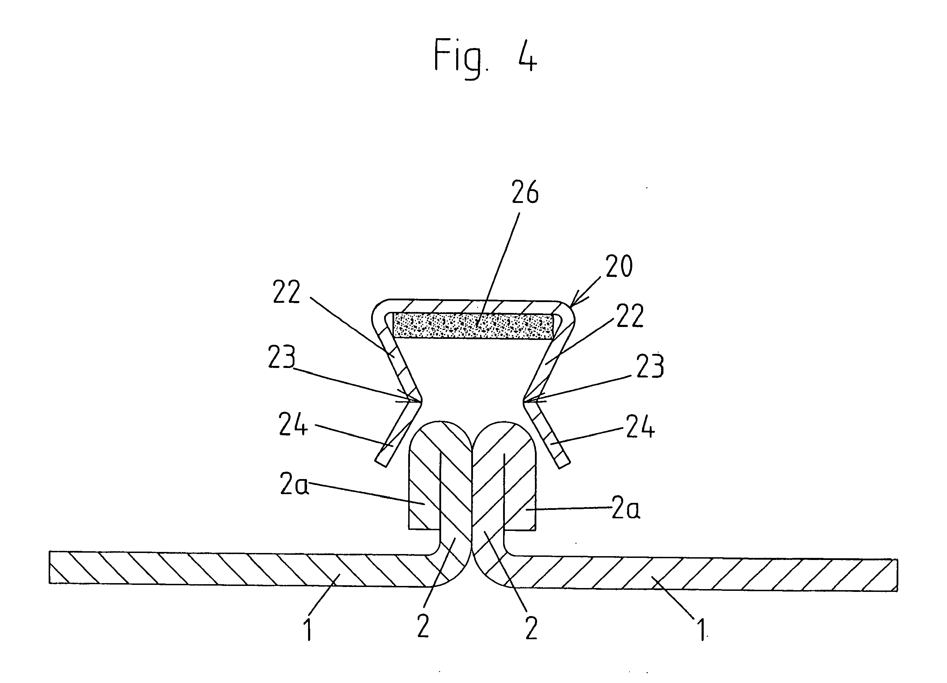

Bei den Ausführungsbeispielen, wie sie in den Figuren 4 bis 6 dargestellt sind, sind Spannringe 20, 30 bzw. 40 aus elastisch federndem Material vorgesehen. In diesem Fall muss der Abstand zwischen den Spannkanten 23, 33 bzw. 43 kleiner sein als der Abstand zwischen den Außenflächen der Endabschnitte 2a, 5a bzw. 8a, jedenfalls in Endposition der Spannringe.

Beim Schließen des Spannringes 20 gemäß Figur 4 werden die Schenkel 22 bis 24 in Axialrichtung aufgeweitet, wobei die Spannkanten 23 mit axialer Vorspannung auf den Außenflächen der Flanschendabschnitte 2a aufliegen.

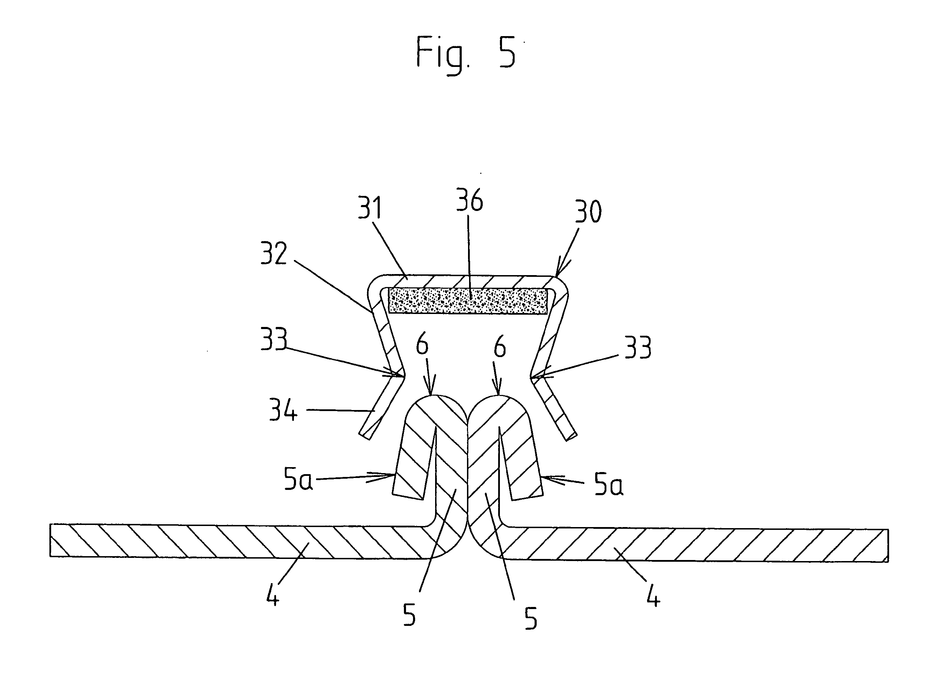

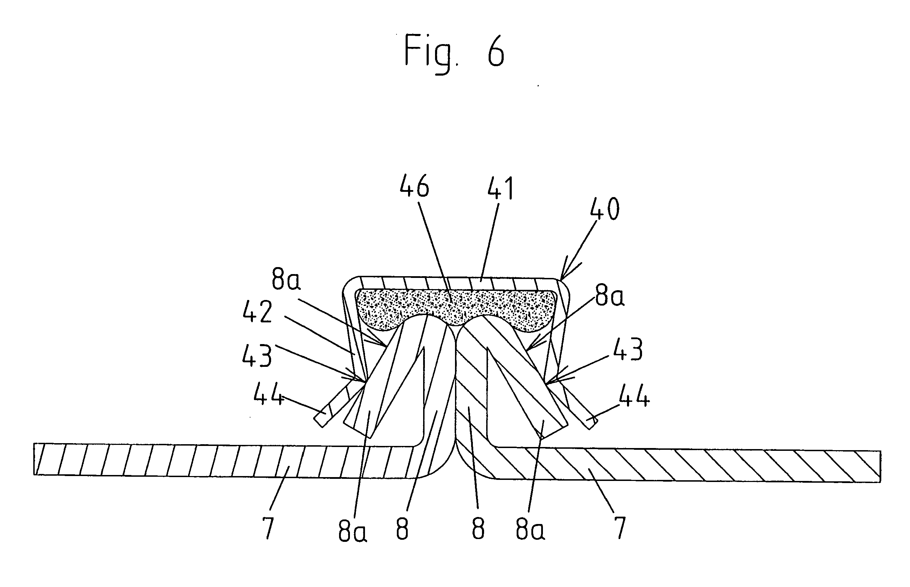

Eine Abwandlung des Spannringes 20 gemäß Figur 4 ist der in Figur 5 dargestellte Spannring 30, welcher der Verbindung von Flanschen 5 mit leicht konischer Profilform, also winklig abstehenden Flanschendabschnitten 5a, dient. Auch bei dieser Gestaltungsform muss der axiale Abstand der Spannkanten 33 geringfügig kleiner sein als der axiale Abstand der Oberflächen der Flanschendabschnitte 5a, wenn der Spannring 30 geschlossen ist, also sich in der etwa in Figur 6 dargestellten Endposition befindet. In dieser Endposition werden die Schenkel 32 bis 34 des Spannringes 30 axial aufgefedert, so dass die Spannkanten 33 mit Vorspannung auf der Oberfläche der Endabschnitte 5a aufliegen.

Eine weitere Abwandlung des Spannringes 30, wie er in Figur 5 dargestellt ist, zeigt Figur 6. Der hier dargestellte Spannring 40 ist so bemessen, dass er für die Verbindung von Kegelflanschverbindungen geeignet ist. Bei sogenannten Kegelflanschverbindungen hat der Endabschnitt 8a der in den Rohren 7 vorgesehenen Endflansche 8 eine stärkere Neigung gegenüber der Flanschebene als bei in Figur 5 dargestellten Flanschverbindungen. Hierbei ist jedoch unbedingt zu beachten, dass der Neigungswinkel der Oberfläche des Endabschnittes 8a, welche einer Flanschkegelfläche entspricht, mindestens 5° kleiner ist als der Neigungswinkel der unteren Schenkelabschnitte 44. Es muss sichergestellt sein, dass die Schenkel 42 bis 44 ausschließlich mit den Spannkanten 43 linienförmig auf der Oberfläche der Flanschendabschnitte 8a, also auf den sogenannten Flanschkegelflächen, aufliegen. Nur so lässt sich eine übermäßige Reibung zwischen dem Spannring 40 und den Endflanschen 8 vermeiden.

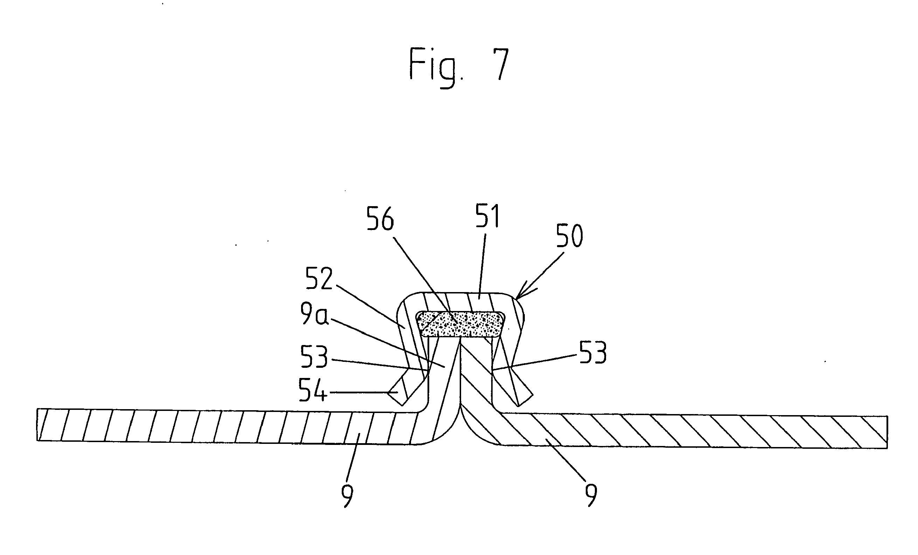

Mit Figur 7 ist schließlich veranschaulicht, dass mit einem erfindungsgemäßen Spannring 50 auch Flansche in einfachster Form, nämlich an die Rohre 9 einstückig angeformte Stehborde 9a, verbindbar ist. In diesem Fall muss der Spannring 50 die bei dem Ausführungsbeispiel gemäß Figur 1 bis 3 aus einem elastisch nicht oder nur wenig verformbaren Material bestehen, wobei der axiale Abstand der Spannkanten 53 der Gesamtstärke der Flansche 9a entspricht.

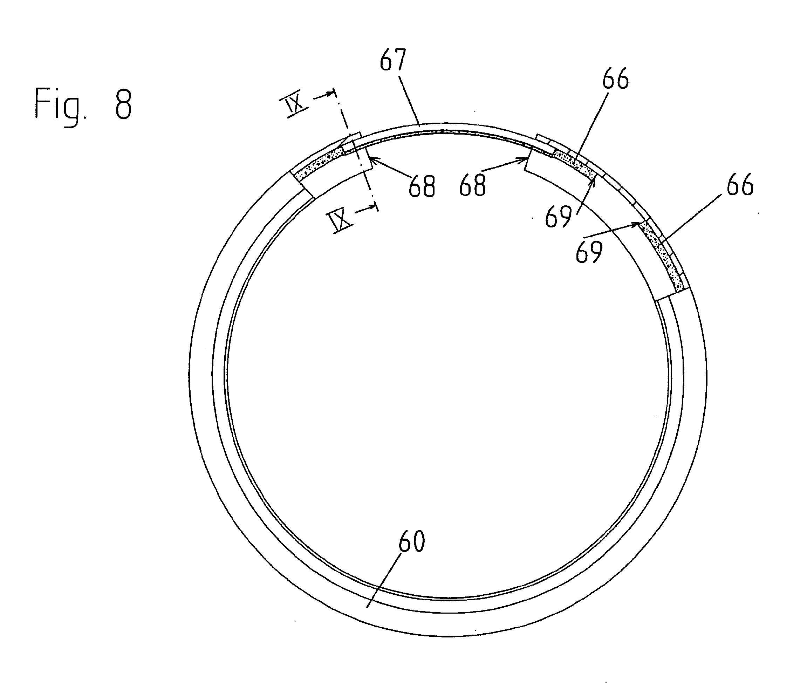

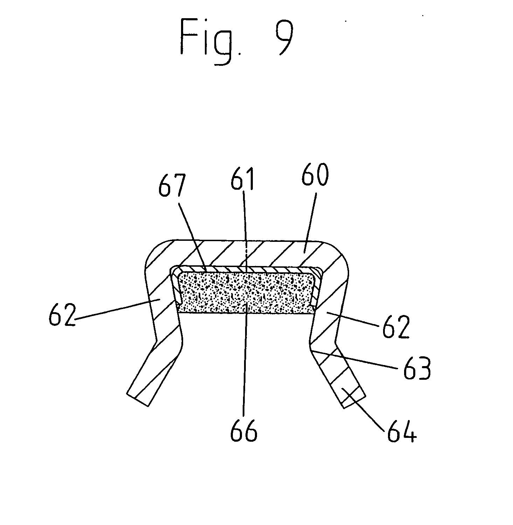

Um eine vollständige Abdichtung über den gesamten Umfang der Verbindungsflansche zu erreichen, ist eine Spannringausbildung gemäß Figur 8 und 9 vorgesehen. Der hier dargestellte Spannring 60 ist mit einem im Querschnitt etwa U-förmigen Brückenblech 67 ausgestattet, das, wie die aufgebrochene Seitenansicht in Figur 8 deutlich macht, die einander gegenüberliegenden Enden 68 des offenen Spannrings 60 überbrückt. Um eine wirksame Abdichtung zu erreichen, sind die Enden 69 des Dichtungsbandes 66 nicht unter der Stoßstelle der Enden 68 des Spannringes 60, sondern versetzt zu dieser angeordnet. Hierbei ist der Abstand zwischen den Enden 69 des Dichtungsbandes 66 etwas kleiner als der Abstand der Ende 68 des Spannringes 60. Hierdurch wird erreicht, dass bei vollständigem Schließen des Spannringes 60 die Enden 69 des Dichtungsbandes 66 durch den Stauchdruck dichtend gegeneinander gepresst werden, was dadurch ermöglicht wird, dass das Dichtungsband 66 in Umfangsrichtung frei verschiebbar im Spannring 60 gelegen ist.

Figur 9 veranschaulicht, dass die Querschnittsform des Brückenblechs 67 an die Innenform des Spannringes 60 angepasst ist, so dass sich das Brückenblech 67 innerhalb des Spannringes 60 im Bereich seiner Enden 68 verschieben kann. Hierbei sichern die zum Mittelsteg 61 schräg verlaufenden inneren Schenkelabschnitte 62 das Brückenblech 67 gegen Herausfallen.

### Bezugszeichenliste

- 1: Rohr
- 2: Endflansch
- 2a: Flanschendabschnitt
- 3: Flanschstirnfläche
- 4: Rohr
- 5: Endflansch
- 5a: Flanschendabschnitt
- 6: Flanschaußenfläche
- 7: Rohr
- 8: Endflansch
- 8a: Flanschendabschnitt
- 9: Rohr
- 9a: Stehbord
- 10: Spannring
- 11: Mittelsteg
- 12: Innerer Schenkelabschnitt
- 13: Spannkante
- 14: Äußerer Schenkelabschnitt
- 15: Außenfläche des Mittelsteges
- 16: Dichtungsband
- 20: Spannring
- 21: Mittelsteg
- 22: Innerer Schenkelabschnitt
- 23: Spannkante
- 24: Äußerer Schenkelabschnitt
- 26: Dichtungsband
- 30: Spannring
- 31: Mittelsteg
- 32: Innerer Schenkelabschnitt
- 33: Spannkante
- 34: Äußerer Schenkelabschnitt
- 36: Dichtungsband
- 40: Spannring
- 41: Mittelsteg
- 42: Innerer Schenkelabschnitt
- 43: Spannkante
- 44: Äußerer Schenkelabschnitt
- 50: Spannring
- 51: Mittelsteg
- 52: Innerer Schenkelabschnitt
- 53: Spannkante
- 54: Äußerer Schenkelabschnitt
- 56: Dichtungsband
- 60: Spannring
- 61: Mittelsteg
- 62: Innerer Schenkelabschnitt
- 63: Spannkante
- 64: Äußerer Schenkelabschnitt
- 66: Dichtungsband
- 67: Brückenblech
- 68: Enden des Spannringes
- 69: Enden des Dichtungsbandes

- A: Einführseite

## Patentansprüche

1. Dem Verbinden von dünnwandigen Rohren mit Endflanschen dienender einteiliger, offener Spannring, dessen Enden mit einem Spannschloss zusammenziehbar sind und der einen im wesentlichen U-förmigen Querschnitt mit an den Endflanschen anliegenden Schenkeln aufweist, welche über einen sich etwa parallel zu den Stirnrändern der Endflansche erstreckenden Mittelsteg miteinander verbunden sind und in Richtung auf die Endflansche vorspringende, mit diesen in Linienberührung gelangende , sich in Umfangsrichtung erstreckende Spannkanten aufweisen,
**dadurch gekennzeichnet, dass** im Spannring (10, 20, 30, 40, 50, 60) ein aus flexiblem Material bestehendes Dichtungsband (16, 26, 36, 46, 56, 66) mit etwa rechteckigem Querschnitt zwischen der Innenfläche des Mittelsteges (11, 21, 31, 41, 51, 61) und den Stirnflächen (3,6) der Endflansche (2, 5, 8, 9a) in Umfangsrichtung des Spannringes (10, 20, 30, 40, 50, 60) verschiebbar angeordnet ist, dass der Abstand zwischen den Enden (69) des Dichtungsbandes (66) kleiner als der Abstand zwischen den Enden (68) des Spannringes (60) ist, wobei der Bereich zwischen den Enden (69) des Dichtungsbandes (66) gegenüber dem Bereich zwischen den Enden (68) des Spannringes (60) versetzt ist, und dass in den Spannring (60) im Bereich seiner Enden (68) ein an den Innenquerschnitt des Spannringes (60) angepasstes Brückenelement (67) zwischen der Innenfläche des Mittelsteges (61) und dem Dichtungsband (66) in Umfangsrichtung verschiebbar eingelegt ist.

2. Spannring nach Anspruch 1;
**dadurch gekennzeichnet, dass** das Brückenelement (67) ein im Querschnitt U-förmiger Profilring aus Blech ist.

3. Spannring nach Anspruch 1 oder 2,
**dadurch gekennzeichnet, dass** die Schenkel (12-14; 22-24; 32-34; 42-44; 52-54; 62-64) im Querschnitt die Form eines flachen V haben, dessen mit dem Mittelsteg (11, 21, 31, 41, 51, 61) verbundener innerer Abschnitt (12, 22, 32, 42, 52, 62) mit diesem einen Winkel von weniger als 90° einschließt, dass sich an diesen Abschnitt (12, 22, 32, 42, 52, 62) ein unter einem Winkel von größer als 90° abstehender äußerer Abschnitt (14, 24, 34, 44, 54, 64) anschließt und dass die Stoßstelle zwischen diesen Abschnitten eine scharfkantige Spannkante (13, 23, 33, 43, 53, 63) bildet.

4. Spannring nach Anspruch 1, 2 oder 3
**dadurch gekennzeichnet, dass** der in Axialrichtung der Rohre (1, 9) gemessene Abstand der Spannkanten (13, 53) von einander der doppelten Stärke der Endflansche (2, 9a) entspricht und der Spannring (10, 50) aus einem elastisch wenig verformbaren Material besteht.

5. Spannring nach einem der Ansprüche 1 bis 4,
**dadurch gekennzeichnet, dass** der in Axialrichtung der Rohre (1, 4, 7) gemessene Abstand der Spannkanten (23, 33, 43) kleiner als die doppelte Stärke der Endflansche (2, 5, 8) ist und dass die Schenkel (22-24; 32-34; 42-44) des Spannringes (20, 30, 40) elastisch federnd ausgebildet sind.

## Claims

1. An integral open clamping ring used for joining thin-walled pipes with end flanges, the ends of which may be pulled together by means of a turnbuckle and which has an essentially U-shaped cross section with legs abutting against the end flanges, which are connected with each other via a central web extending approximately parallel to the end faces of the end flanges and which have clamping edges projecting in the direction of the end flanges, coming into linear contact therewith and extending in a circumferential direction,
**characterised in that** a sealing strip (16, 26, 36, 46, 56, 66) made of a flexible material and having an approximately rectangular cross section between the internal surfaces of the central web (11, 21, 31, 41, 51, 61) and the end faces (3, 6) of the end flanges (2, 5, 8, 9a) in the circumferential direction of the clamping ring (10, 20, 30, 40, 50, 60) is slidably disposed in the clamping ring (10, 20, 30, 40, 50, 60), that the distance between the ends (69) of the sealing strip (66) is smaller than the distance between the ends (68) of the clamping ring (60), wherein the area between the ends (69) of the sealing strip (66) is offset relative to the area between the ends (68) of the clamping ring (60), and that in the clamping ring (60) in the area of the ends (68) thereof, a bridging element (67) adapted to the internal cross section of the clamping ring (60) is slidably inserted in the circumferential direction between the internal surface of the central web (61) and the sealing strip (66).

2. The clamping ring as claimed in Claim 1, **characterised in that** the bridging element (67) is a profile ring made of sheet metal and having a U-shaped cross section.

3. The clamping ring as claimed in Claim 1 or 2, **characterised in that** the legs (12-14; 22-24; 32-34; 42-44; 52-54; 62-64) have a cross section in the shape of a flat V, the internal portion (12, 22, 32, 42, 52, 62) of which, which is connected to the central web (11, 21, 31, 41, 51, 61), forms an angle of less than 90° therewith, that an external portion (14, 24, 34, 44, 54, 64) projecting at an angle of more than 90° immediately follows this portion (12, 22, 32, 42, 52, 62) and that the joint between these portions forms a sharp clamping edge (13, 23, 33, 43, 53, 63).

4. The clamping ring as claimed in Claim 1, 2 or 3, **characterised in that** the distance of the clamping edges (13, 53) as measured in the axial direction of the pipes (1, 9) corresponds to twice the thickness of the end flanges (2, 9a) and the clamping ring (10, 50) is made from a material with low elastic deformability.

5. The clamping ring as claimed in any one of Claims 1 to 4, **characterised in that** the distance of the clamping edges (23, 33, 43) as measured in the axial direction of the pipes (1, 4, 7) is less than twice the thickness of the end flanges (2, 5, 8) and that the legs (22-24; 32-34; 42-44) of the clamping ring (20, 30, 40) are formed to be elastically resilient.

## Revendications

1. Collier de serrage ouvert une seule pièce pour relier des tubes à paroi mince munis de collets dont les extrémités peuvent être serrées l'une vers l'autre au moyen d'un dispositif de serrage et qui présente une section essentiellement en forme de U avec des branches s'appliquant contre les collets d'extrémité, étant reliées entre elles au moyen d'une âme sensiblement parallèle au bord extérieur des collets, et des arrêtes de serrage dirigées vers les collets qu'elles touchent, par un contact linéaire dans la direction périphérique,
**caractérisé en ce qu'**
une bande d'étanchéité (16, 26, 36, 46, 56, 66), composée d'un matériau souple avec une section sensiblement rectangulaire est prévue dans le collier de serrage (10, 20, 30, 40, 50, 60), entre la surface intérieure de l'âme (11, 21, 31, 41, 51, 61) et les bords (3, 6) des collets (2, 5, 8, 9a), disposée coulissante dans la direction de la périphérie du collier (10, 20, 30, 40, 50, 60),
l'intervalle entre les extrémités (69) de la bande d'étanchéité (66) étant inférieur à l'intervalle entre les extrémités (68) du collier (60),
la zone entre les extrémités (69) de la bande d'étanchéité (66) étant décalée par rapport à la zone entre les extrémités (68) du collier (60),
et à l'intérieur du collier (60), dans la zone de ses extrémités (68), on insert un élément de pont (67) adapté à la section intérieure du collier (60) coulissant dans la direction périphérique entre la surface intérieure de l'âme (61) et la bande d'étanchéité (66).

2. Collier de serrage selon la revendication 1,
**caractérisé en ce que**
l'élément de pont (67) présente un profil en tôle à section en U.

3. Collier de serrage selon la revendication 1 ou 2,
**caractérisé en ce que**
les branches (12-14; 22-24; 32-34; 42-44; 52-54; 62-64) ont une section en forme de V ouvert dont le segment intérieur (12, 22, 32, 42, 52, 62) relié à l'âme (11, 21, 31,41,51,61) forme avec celui-ci un angle inférieur à 90°,
et un segment extérieur (14, 24, 34, 44, 54, 64) est relié à ce segment (12, 22, 32, 42, 52, 62) en formant un angle supérieur à 90°, et l'emplacement de contact entre ces segments, constitue une arête de mise en tension (13, 23, 33, 43, 53, 63) ayant une arête vive.

4. Collier de serrage selon l'une des revendications 1, 2 ou 3,
**caractérisé en ce que**
l'intervalle entre les arêtes de mise en tension (13, 53), mesuré dans la direction axiale des tuyaux (1, 9), correspond au double de l'épaisseur des collets (2, 9a), et que le collier (10, 50) est composé d'un matériau élastiquement moins déformable.

5. Collier de serrage selon l'une des revendications 1 à 4,
**caractérisé en ce que**
l'intervalle entre les arêtes de mise en tension (23, 33, 43), mesuré dans la direction axiale des tuyaux (1, 4, 7) est inférieur au double de l'épaisseur des collets (2, 5, 8) et que les branches (22-24; 32-34; 42-44) du collier (20, 30, 40), sont réalisées avec un effet de rappel élastique.
